# EUROPÄISCHE PATENTSCHRIFT

(11) **EP 2 285 633 B1**
(45) Veröffentlichungstag und Bekanntmachung des Hinweises auf die Patenterteilung: **25.01.2017**
(21) Anmeldenummer: 09765538.5
(22) Anmeldetag: 04.06.2009
(51) Int. Cl.: B60T 8/36

(54) **DRUCKSTEUERVENTILANORDNUNG MIT MEMBRANVENTILEN**
PRESSURE CONTROL VALVE ARRANGEMENT HAVING DIAPHRAGM VALVES
AGENCEMENT DE VANNES DE COMMANDE DE PRESSION AVEC VANNES À MEMBRANE

(30) Priorität: 17.06.2008 DE 102008028439
(43) Veröffentlichungstag der Anmeldung: 23.02.2011
(73) Patentinhaber: KNORR-BREMSE Systeme für Nutzfahrzeuge GmbH, 80809 München (DE)
(72) Erfinder: EIDENSCHINK, Rainer, 81927 München (DE); GERBER, Wilfried, 82538 Geretsried (DE); RÖTHER, Friedbert, 74389 Cleebronn (DE); GREBE, Jan, 80939 München (DE)
(74) Vertreter: Schönmann, Kurt
(86) Internationale Anmeldenummer: PCT/EP2009/003997
(87) Internationale Veröffentlichungsnummer: WO 2009/152958

(56) Entgegenhaltungen:
- EP-A- 0 154 784
- EP-A- 0 498 584
- EP-A1- 0 539 770
- WO-A-2008/034525
- DE-A1- 2 517 571
- DE-A1- 2 938 437
- DE-A1- 10 156 773

## Beschreibung

Die Erfindung betrifft eine Drucksteuerventilanordnung zur Steuerung des Fluiddrucks in einer ABS-Bremsanlage eines Fahrzeugs gemäß dem Oberbegriff von Anspruch 1.

Ein ABS (Antiblockiersystem) verhindert ein Blockieren der Räder und tritt in Funktion, wenn zwischen einem Reifen und der Fahrbahn ein größerer Kraftschluss beansprucht wird, als übertragbar ist, d.h. wenn durch den Fahrer überbremst wird. Bei Überbremsung erkennt das zentrale elektronische Steuergerät der ABS-Bremsanlage aus Drehzahlfühlersignalen die Blockierneigung eines oder mehrerer Räder und berechnet daraus die Ansteuerung der auf den zugeordneten Bremszylinder einwirkenden Drucksteuerventilanordnung. Der Bremsdruck wird dann mittels der Drucksteuerventilanordnung durch Senken, Halten oder Aufbauen nach Maßgabe des Radverhaltens und damit der Reibungsverhältnisse zwischen Reifen und Fahrbahn auf einen optimalen Schlupf eingestellt.

Eine Drucksteuerventilanordnung einer ABS-Bremsanlage ist aus der DE 101 56 773 A1 bekannt. Für ABS-Bremsanlagen von Fahrzeugen werden meist Einkanal-Drucksteuerventile mit und ohne Relaiswirkung verwendet. Drucksteuerventilanordnungen mit Relaiswirkung werden in Sattelaufliegern und Deichselanhängern verwendet. ABS-Drucksteuerventilanordnungen ohne Relaiswirkung, auf welche sich die vorliegende Erfindung bezieht, finden bei allen anderen Fahrzeugen Verwendung, beispielsweise bei Nutzfahrzeugen, Omnibussen, Sattelzugmaschinen wie auch bei Anhängern. Drucksteuerventilanordnungen ohne Relaiswirkung verfügen über 3/2-Wege-Magnetventile als Vorsteuerventile von Membranventilen, wobei eine elektronische Steuereinrichtung die 3/2-Wege-Magnetventile ansteuert, um die für den ABS-Betrieb notwendigen Funktionen "Druckhalten", "Druckabbau" und "Druckaufbau" durchführen zu können. Während einer Bremsung ohne Ansprechen des ABS (keine Blockierneigung eines Rades) durchströmt das Druckmittel, meist Luft beim Be- und Entlüften der Bremszylinder die Drucksteuerventilanordnungen ungehindert in beiden Richtungen. Damit ist sichergestellt, dass die Funktion der Betriebsbremsanlage nicht durch die ABS-Drucksteuerventilanordnung beeinflusst wird. Eine gattungsgemäße Drucksteuerventilanordnung ist aus der DE 25 17 571 A bekannt.

Der Erfindung liegt demgegenüber die Aufgabe zugrunde, eine Drucksteuerventilanordnung der gattungsgemäßen Art derart weiter zu bilden, dass sie einfacher zu fertigen und zu montieren ist.

Diese Aufgabe wird erfindungsgemäß durch die Merkmale von Anspruch 1 gelöst.

### Offenbarung der Erfindung

Erfindungsgemäß ist vorgesehen, dass in einer Fläche eines Gehäuseteils des Gehäuses zwei nebeneinander angeordnete Öffnungen zum Einsetzen oder Einlegen der Membrane vorgesehen und Ränder der Membrane zwischen Öffnungsrändern der Öffnungen und einem weiteren Gehäuseteil des Gehäuses gehalten sind, wobei die Öffnungsränder der Öffnungen in einer gemeinsamen Ebene liegen und die Flächennormalen der Öffnungsränder der Öffnungen in die gleiche Richtung weisen.

Unter "einer" Fläche soll dabei eine einzige einheitliche Fläche des Gehäusebauteils verstanden werden, also beispielsweise eine Seitenfläche, eine Stirnfläche oder eine Bodenfläche.

Unter einer "Flächennormalen" soll dabei eine auf der entsprechenden freien Fläche errichtete Senkrechte verstanden werden, welche von dieser freien Fläche weg weist oder weg ragt.

Eine Drucksteuerventilanordnung mit diesen Merkmalen lässt sich auf einfache Weise dann mit folgenden Schritten wenigstens teilweise herstellen bzw. montieren:
a) Urformen der wenigstens zwei Membrane,
b) Anordnen des einen Gehäuseteils derart, dass die Flächennormalen der Öffnungsränder der Öffnungen parallel zu einer Montagerichtung sind,
c) Einlegen der Membranen der Membranventile in der Montagerichtung in die Öffnungen derart, dass die Membranränder auf den Öffnungsrändern aufliegen, und dann
d) Aufbringen der Federelemente auf die Membrane in Montagerichtung,
e) Aufbringen des weiteren Gehäuseteils auf das eine Gehäuseteil in Montagerichtung derart, dass einerseits die Membranränder zwischen dem einen Gehäuseteil und dem weiteren Gehäuseteil gekontert und andererseits die Federelemente an den Membranen und dem weiteren Gehäuseteil abgestützt sind.

Die Membranen werden vorzugsweise aus einem Elastomer durch Urformen hergestellt, wobei sie nach dem Entnehmen aus der Form gegebenenfalls durch angespritzte Dichtungen aus Elastomer miteinander verbunden sind.

Weil die Öffnungen für die Membrane an einer Fläche nebeneinander angeordnet sind, die Öffnungsränder der Öffnungen in einer gemeinsamen Ebene (koplanar) und die Flächennormalen der Öffnungsränder der Öffnungen auch in die gleiche Richtung weisen, können die unter Umständen durch angespritzte Dichtungen verbundenen Membranen von einer einzigen Seite her, bevorzugt von oben her in die Öffnungen eingeführt bzw. eingelegt werden. Durch diese Maßnahmen vereinfacht sich die Fertigung und Montage einer Drucksteuerventilanordnung gegenüber Lösungen des Stands der Technik, bei welchen die Öffnungen für die Membrane an unterschiedlichen Flächen des Gehäuses angeordnet sind und demzufolge eine Montage der Membranen nur von mehreren Montagerichtungen her möglich ist, was beispielsweise ein Umspannen des Gehäuses und eine größere Anzahl von Montageschritten erfordert.

Weiterhin sind keine weiteren Bauteile erforderlich, um die Membranen randseitig im Gehäuse zu halten, da sie zwischen dem einen Gehäuseteil und dem weiteren Gehäuseteil beispielsweise durch Presssitz gekontert sind.

Weiterhin erfindungsgemäß wird das die Öffnungen für die Membranen aufweisende Gehäuseteil durch einen Leichtmetall-Spritzgussformling gebildet. Besonders bevorzugt besteht dieses Gehäuseteil aus einem Aluminium-Druckgussbauteil. Dann sind die Festigkeit und Steifigkeit des Materials ausreichend hoch, um mit Gewinden versehene Anschlüsse für Fluidleitungen direkt, d.h. ohne Vorsehen von Einsätzen, in dem Gehäuseteil vorzusehen.

Weiterhin erfindungsgemäß ist das andere Gehäuseteil ein Kunststoff-Spritzgussformling, in welchen die Magnetspulen der elektromagnetischen Steuerventile eingespritzt sind.

Durch die in den Unteransprüchen aufgeführten Maßnahmen sind vorteilhafte Weiterbildungen und Verbesserungen der in Anspruch 1 angegebenen Erfindung möglich.

Gemäß einer Weiterbildung sind die die Membranen der Membranventile belastenden Federelemente einerseits zentral an den Membranen und andererseits an dem weiteren Gehäuseteil abgestützt, wobei in dem weiteren Gehäuseteil zu dem einen Gehäuseteil weisende Sacklochbohrungen zur wenigstens teilweisen Aufnahme der Federelemente vorgesehen sind. Durch die Sacklochbohrungen werden die Federelemente bei der Montage des weiteren Gehäuseteils an dem einen Gehäuseteil automatisch zentriert und in ihrer Einbaulage fxiert.

Besonders bevorzugt wird das weitere Gehäuseteil durch einen Kunststoff-Spritzgussformling gebildet, wobei wenigstens ein Ventilsitz des wenigstens einen elektromagnetischen Steuerventils mit dem weiteren Gehäuseteil einstückig ausgebildet ist. Dieser Ventilsitz braucht nach dem Urformen zusammen mit dem weiteren Gehäuseteil dann nicht mehr weiter, beispielsweise spanabhebend bearbeitet werden, da die Oberflächengüte bzw. -rauhigkeit eines spritzgegossenen Kunststoffs die an einen solchen Ventilsitz gestellten Dichtigkeitsanforderungen erfüllen. Damit werden den Ventilsitz bildende Einsätze als zusätzliche Bauteile hinfällig, was in einer vorteilhaften Reduzierung der Anzahl der Bauelemente der Drucksteuerventilanordnung resultiert.

Bevorzugt ist dieses andere Gehäuseteil mit wenigstens einer Durchgangsbohrung zum Einsetzen von Bauteilen des wenigstens einen elektromagnetischen Steuerventils wie einem Anker oder einem Magnetkern versehen, wobei eine Mittelachse der Durchgangsbohrung parallel zu den Flächennormalen der Öffnungsränder der Öffnungen für die Membranen in dem einen Gehäuseteil angeordnet ist. Die wenigstens eine Durchgangsbohrung des anderen Gehäuseteils wird bevorzugt durch einen Deckel verschlossen.

Zweckmäßig ist dann der wenigstens eine dem elektromagnetischen Steuerventil zugeordnete Ventilsitz an einer zu dem anderen Gehäuseteil weisenden Fläche des weiteren Gehäuseteils ausgebildet.

Auf der Basis der oben beschriebenen Ausgestaltung der Bauelemente der Drucksteuerventilanordnung beinhaltet das Verfahren zu ihrer Herstellung dann noch wenigstens die folgenden Schritte:
f) Fertigen wenigstens eines Ventilsitzes des wenigstens einen elektromagnetischen Steuerventils in dem weiteren Gehäuseteil in einer Fläche, welche zu dem anderen Gehäuseteil weist,
g) Fertigen wenigstens einer Durchgangsbohrung in dem anderen Gehäuseteil des Gehäuses zur Aufnahme von Bauelementen des wenigstens einen elektromagnetischen Steuerventils wie eines Ankers und/oder eines Magnetkerns, wobei eine Mittelachse der Durchgangsbohrung parallel zu den Flächennormalen der Öffnungsränder der Öffnungen für die Membrane in dem einen Gehäuseteil bzw. parallel zur Montagerichtung ist,
h) Einsetzen der Bauelemente des wenigstens einen elektromagnetischen Steuerventils in die Durchgangsbohrung in dem anderen Gehäuseteil in der Montagerichtung,
j) Aufbringen des anderen Gehäuseteils auf das weitere Gehäuseteil in Montagerichtung derart, dass der wenigstens eine Ventilsitz in dem weiteren Gehäuseteil mit den in dem anderen Gehäuseteil angeordneten Bauelementen des wenigstens einen elektromagnetischen Steuerventils zusammenwirken kann.

Alle wesentlichen Bauelemente der Drucksteuerventilanordnung wie die Gehäuseteile, die Membranventile und das wenigstens eine elektromagnetische Steuerventil können dann von einer einzigen Montagerichtung her, vorzugsweise vertikal und von oben montiert werden, was den Vorteil hat, dass während der Montage nicht umgespannt werden muss. Die Montagerichtung der Drucksteuerventilanordnung wird daher insbesondere durch die Richtung der Flächennormalen der Öffnungsränder der Öffnungen in dem einen Gehäuseteil vorgegeben, da in dieser Richtung die Membranen in die Öffnungen eingesetzt werden.

Besonders bevorzugt besteht das Gehäuse der Drucksteuerventilanordnung lediglich oder ausschließlich aus dem einen Gehäuseteil, dem weiteren Gehäuseteil und dem anderen Gehäuseteil. Auch diese Maßnahme führt zu einer vorteilhaft niedrigen Anzahl von Bauelementen der erfindungsgemäßen Drucksteuerventilanordnung, welche bevorzugt eine einkanalige Drucksteuerventilanordnung ist.

Weitere die Erfindung verbessernde Maßnahmen werden nachstehend gemeinsam mit der Beschreibung eines bevorzugten Ausführungsbeispiels der Erfindung anhand der Zeichnung näher dargestellt. In der Zeichnung zeigt
- Fig. 1: eine Prinzipdarstellung einer ABS-Bremsanlage als allgemeines Schema eines 4S/4K-ABS-Bremsanlage eines Fahrzeugs,
- Fig.4: eine Querschnittsdarstellung entlang der Linie IV-IV von Fig.3.

### Beschreibung des Ausführungsbeispiels

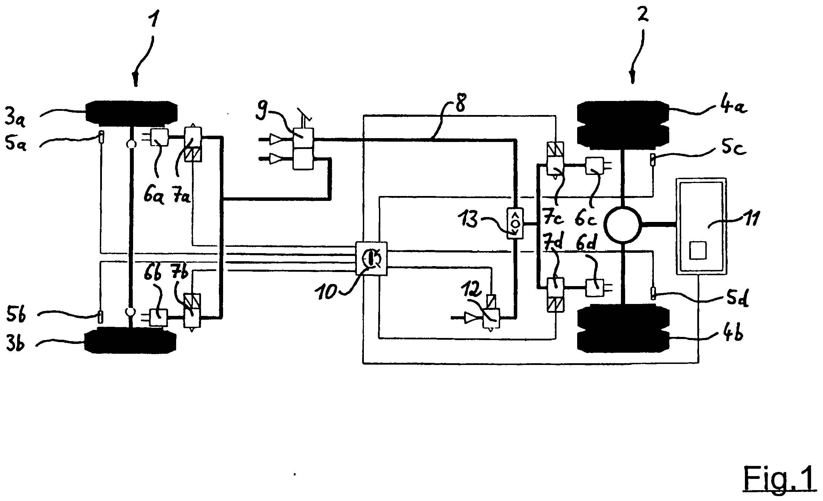

Gemäß Fig. 1 weist ein mit einer ABS-Bremsanlage ausgestattetes Fahrzeug eine Vorderachse 1 sowie eine Hinterachse 2 auf. An der Vorderachse 1 sind Räder 3a und 3b angeordnet; die Hinterachse 2 weist beispielsweise jeweils mit Zwillingsbereifung ausgestattete Räder 4a und 4b auf. Die zur Bremsung dieser Räder 3a, 3b und 4a, 4b dienende ABS-Bremsanlage ist hier nach Art einer 4S/4K-Anlage (vier Sensoren, vier Kanäle) ausgebildet. Dies bedeutet, dass hier insgesamt vier Drehzahlsensoren 5a-5d sowie vier Drucksteuerventilanordnungen 7a-7d zur Verfügung stehen. Die Drucksteuerventilanordnungen 7a-7d dienen der Ansteuerung von jeweils zugeordneten Bremszylindern 6a-6d. Über eine sich verzweigende pneumatische Bremsdruckleitung 8 stehen alle Drucksteuerventilanordnungen 7a-7d mit einem Fußbremsventil 9 in Verbindung.

Der Fahrer erzeugt bei Betätigung des Fußbremsventils 9 einen Bremsdruck, der über die pneumatische Bremsdruckleitung 8 die Drucksteuerventilanordnungen 7a-7d passierend an die den Rädern 3a,3b sowie den Rädern 4a,4b zugeordneten Bremszylindern 6a-6d weitergeleitet wird.

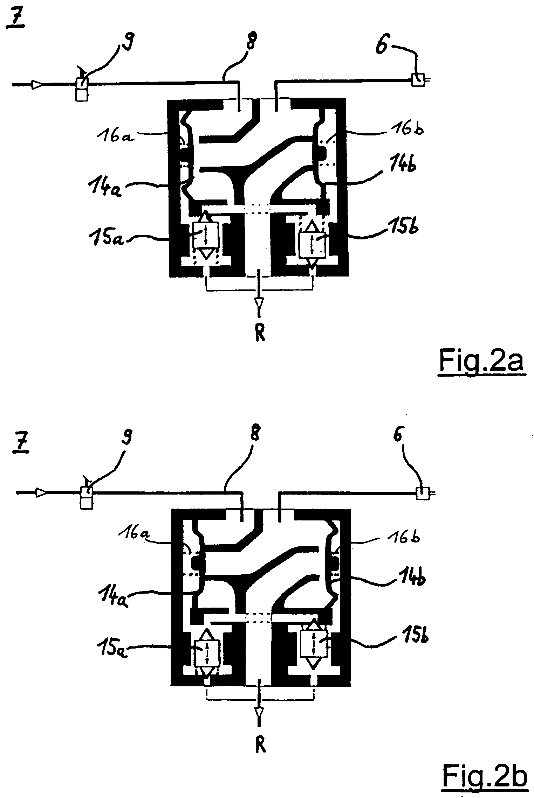

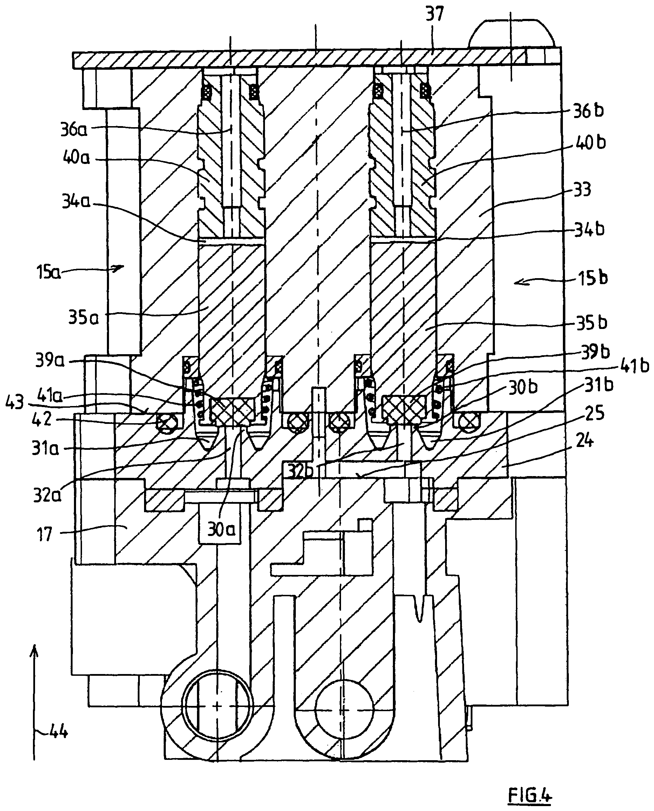

Die Drucksteuerventilanordnungen 7a-7d sind über integrierte, in Fig.2a, Fig.2b und Fig.4 gezeigte Elektromagnetventile 15a, 15b ansteuerbar und sind zu diesem Zwecke mit einer zentralen elektronischen Steuereinheit 10 elektrisch verbunden. Eingangsseitig steht die elektronische Steuereinheit 10 mit den vier die Radgeschwindigkeiten ermittelnden Drehzahlsensoren 5a-5b in Verbindung. Im Falle des Blockierens eines Rades 3a-3d wird entsprechend einer ABS-Regelung nach Maßgabe der elektronischen Steuereinheit 10 der vom Fahrer über das Fußbremsventil 9 eingesteuerte Bremsdruck durch die entsprechende Drucksteuerventilanordnung 7a-7d soweit herabgesetzt, bis das Blockieren beseitigt ist. Die ABS-Bremsanlage des vorliegenden Ausführungsbeispiels umfasst weiterhin eine ASR-Funktion, welche eine ASR-Einheit 11 zum Reduzieren des Motormoments wie ein ASR-Magnetventil 12 und ein Wechselventil 13 umfasst.

Die gemäß Figur 2a im Rahmen der ABS-Bremsanlage zum Zwecke der ABS-Regelung eingesetzte Drucksteuerventilanordnung 7 ist hier nach Art einer 1-Kanal-Drucksteuerventilanordnung aufgebaut und besteht im Wesentlichen aus zwei integrierten Membranventilen 14a und 14b und zwei diese ansteuernden, federbelasteten Elektromagnetventilen 15a, 15b. Die Membranventile 14a und 14b sind jeweils durch Federelemente 16a, 16b in Schließrichtung belastet und werden über die jeweils zugeordneten Elektromagnetventile 15a und 15b vorgesteuert.

Die Drucksteuerventilanordnung 7 ist in Fig.2a in seiner Offenstellung gezeigt, bei der ein Druckaufbau zum angeschlossenen Bremszylinder 6 erfolgt. Hierbei wird keines der Magnetventile 15a und 15b elektrisch angesteuert. In der gezeigten Stellung drückt die vom Fußbremsventil 9 kommende Druckluft das als Einlassventil ausgebildete Membranventil 14a auf. Durch das normal geschlossene Elektromagnetventil 15a wird verhindert, dass das zugeordnete Membranventil 14a wieder verschlossen wird. Durch das normal geöffnete zweite Elektromagnetventil 15b verschließt der vom Fußbremsventil 9 kommende Bremsdruck das als Auslassventil dienende zweite Membranventil 14b. Somit durchläuft die Druckluft ungehindert die Drucksteuerventilanordnung 7. In diesem Zustand befindet sich die Drucksteuerventilanordnung 7 auch dann, wenn keine ABS-Regelung erfolgt.

Zum Konstanthalten des Bremsdrucks in einem Bremszylinder 6a bis 6d ist lediglich das Elektromagnetventil 15a zu bestromen, wodurch dieses öffnet und infolgedessen der vom Fußbremsventil 9 kommende Bremsdruck das einlassseitige Membranventil 14a zudrückt. Nun ist der Druck auf der rechten und linken Seite des Membranventils 14a gleich groß. Da aber die Wirkfläche auf der linken Seite des Membranventils 14a größer ist, wird das Membranventil 14a geschlossen. Entsprechendes gilt für das über das Elektromagnetventil 15b angesteuerte auslassseitige Membranventil 14b. Die Drucksteuerventilanordnung 7 verschließt zum Konstanthalten des Drucks also die vom Fußbremsventil 9 zum Bremszylinder 6 verlaufende pneumatische Bremsdruckleitung 8.

Gemäß Figur 2b wird ein Druckabbau in einem Bremszylinder 6a bis 6d dadurch erzielt, dass beide Elektromagnetventile 15a und 15b bestromt werden. Für das Elektromagnetventil 15a und das zugeordnete einlassseitige Membranventil 14a gilt das vorstehend zum Druckhalten Beschriebene. Hingegen ist das andere Elektromagnetventil 15b wegen der Bestromung geschlossen. Deshalb drückt der vom Bremszylinder 6 kommende Druck das auslassseitige Membranventil 14b auf und der Bremszylinder 6 wird entlüftet.

Die vorstehend beschriebenen Funktionen der Drucksteuerventilanordnung 7 werden nach Maßgabe der elektronischen Steuereinheit 10 im Rahmen einer ABS/ASR-Regelung im eingangs beschriebenen Sinne durchgeführt.

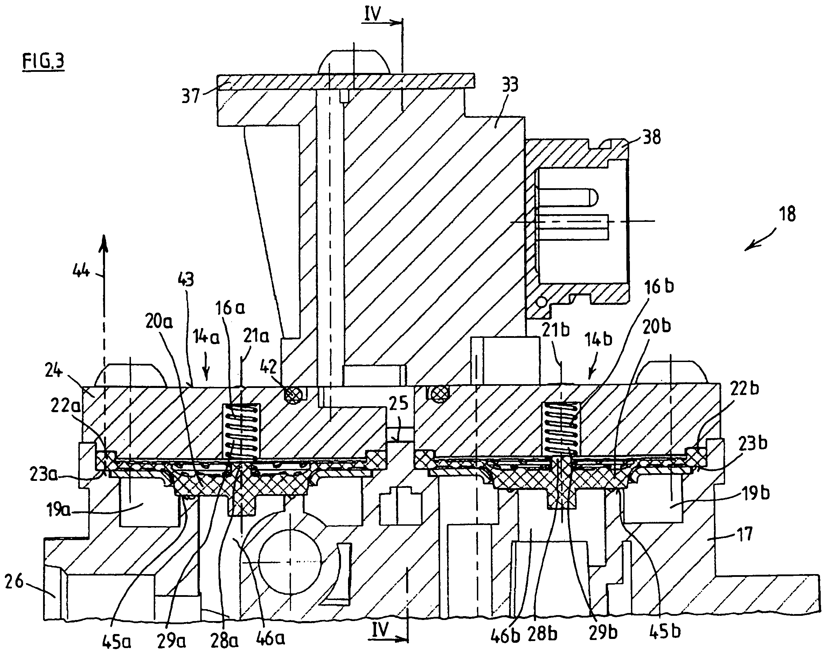

In Fig.3 und Fig.4 ist die in Fig.2a und Fig.2b lediglich schematisch dargestellte Drucksteuerventilanordnung 7 in einer konkreten Ausführungsform in Einbaulage gezeigt, d.h. oben dargestellte Bauteile befinden sich oben. Bei dieser Ausführungsform sind die beiden Elektromagnetventile 15a, 15b zum Vorsteuern der Membranventile 14a, 14b in einem Doppelmagnetventil zusammengefasst, dessen Funktion jedoch analog zu Einzelventilen 15a, 15b ist.

An einer in Fig.3 und Fig.4 oberen Fläche eines unteren Gehäuseteils 17 eines Gehäuses 18 der Drucksteuerventilanordnung 7 sind zwei nebeneinander angeordnete Öffnungen 19a, 19b zum Einsetzen oder Einlegen von Membranen 20a, 20b der Membranventile 14a, 14b vorgesehen. Die Mittelachsen 21 a, 21 b der Öffnungen 19a, 19b sind dabei parallel zueinander und vertikal ausgerichtet. Die Membranen 20a, 20b wirken jeweils mit einem Membranventilsitz 45a, 45b zusammen, wobei durch eine Membran 20a, 20b ein Strömungsquerschnitt eines Fluidkanals 46a, 46b freigegeben oder verschlossen wird, je nachdem ob die Membran 20a, 20b auf dem Membranventilsitz 45a, 45b aufsitzt oder von diesem abgehoben ist.

Die Membranränder 22a, 22b der Membranen 20a, 20b sind zwischen Öffnungsrändern 23a, 23b der Öffnungen 19a, 19b und einem weiteren Gehäuseteil 24 des Gehäuses 18 der Drucksteuerventilanordnung 7 gehalten, wobei die Öffnungsränder 23a, 23b der Öffnungen 19a, 19b bevorzugt in einer gemeinsamen Ebene liegen und die gedachten Flächennormalen der Öffnungsränder 23a, 23b der Öffnungen 19a, 19b, deren Richtung in Fig.3 und Fig.4 durch den Pfeil 44 verdeutlicht ist, in die gleiche Richtung weisen, hier nach oben. Alternativ könnten die Öffnungsränder 23a, 23b der Öffnungen 19a, 19b auch in parallelen Ebenen liegen, was im vorliegenden Fall bedeuten würde, dass sie gemäß Fig.3 vertikal versetzt angeordnet sind.

Die Membrane 20a, 20b werden vorzugsweise aus einem Elastomer wie beispielsweise NBR durch Urformen hergestellt, wobei sie gegebenenfalls durch angespritzte Dichtungen miteinander verbunden sind.

Das weitere Gehäuseteil 24 besteht beispielsweise in einer Zwischenplatte, welche eine obere, die Öffnungen 19a, 19b für die Membrane 20a, 20b aufweisende Fläche 25 des unteren Gehäuseteils 17 kontaktiert und an dem unteren Gehäuseteil 17 befestigt ist, bevorzugt durch Verschraubung mit diesem.

In dem die Öffnungen 19a, 19b für die Membrane 20a, 20b aufweisenden, in Fig.3 und Fig.4 unteren Gehäuseteil 17 sind sämtliche Schraubanschlüsse für an die Drucksteuerventilanordnung 7 anzuschließende Fluidleitungen ausgebildet, wobei dieses untere Gehäuseteil 17 durch einen Leichtmetall-Spritzgussformling gebildet wird. Besonders bevorzugt besteht das untere Gehäuseteil 17 aus einem Aluminium-Druckgussbauteil. Exemplarisch ist in Fig.3 einer dieser Schraubanschlüsse 26 dargestellt. Diese Schraubanschlüsse 26 sind vorzugsweise direkt, d.h. ohne Vorsehen von Gewindeeinsätzen in dem unteren Gehäuseteil gefertigt, beispielsweise durch Gewindeschneiden.

Die Membrane 20a, 20b der Membranventile 14a, 14b belastenden Federelemente 16a, 16b sind einerseits zentral an den Membranen 20a, 20b , beispielsweise durch von den Membranen 20a, 20b weg ragende Zentrierzapfen 28a 28b und andererseits an der Zwischenplatte 24 abgestützt. Die Zwischenplatte 24 ist zur wenigstens teilweisen Aufnahme der Federelemente 16a, 16b mit zu dem unteren Gehäuseteil 17 weisenden Sacklochbohrungen 29a, 29b versehen. Die Federelemente 16a, 16b sind beispielsweise Schraubenfedern mit vorzugsweise vertikalen Federmittelachsen, so dass die Bewegungs- oder Wirkrichtung der Membranen 20a, 20b parallel zur einer später noch zu erläuternden Montagerichtung sind. Somit werden die Federelemente 16a, 16b bei der Montage der Zwischenplatte 24 sowohl an dem unteren Gehäuseteil 17 als auch an der Zwischenplatte 24 automatisch zentriert und in ihrer Einbaulage fxiert.

Besonders bevorzugt wird die Zwischenplatte 24 durch einen Kunststoff-Spritzgussformling aus beispielsweise Polyamid gebildet, wobei Ventilsitze 30a, 30b der Elektromagnetventile 15a, 15b mit der Zwischenplatte 24 einstückig Sacklochbohrungen 29a, 29b versehen. Die Federelemente 16a, 16b sind beispielsweise Schraubenfedern mit vorzugsweise vertikalen Federmittelachsen, so dass die Bewegungs- oder Wirkrichtung der Membranen 20a, 20b parallel zur einer später noch zu erläuternden Montagerichtung sind. Somit werden die Federelemente 16a, 16b bei der Montage der Zwischenplatte 24 sowohl an dem unteren Gehäuseteil 17 als auch an der Zwischenplatte 24 automatisch zentriert und in ihrer Einbaulage fxiert.

Besonders bevorzugt wird die Zwischenplatte 24 durch einen Kunststoff-Spritzgussformling aus beispielsweise Polyamid gebildet, wobei Ventilsitze 30a, 30b der Elektromagnetventile 15a, 15 mit der Zwischenplatte 24 einstückig ausgebildet sind. Wie insbesondere aus Fig.4 hervorgeht, sind die Ventilsitze 30a, 30b dadurch kegelfömig ausgebildet, dass die die Ventilsitze 30a, 30b aufweisende Fläche 43 der Zwischenplatte 24 mit ringförmigen Sacklochausnehmungen 31 a, 31 b versehen ist. Im Bereich der Ventilsitze 30a, 30b münden im Mündungsbereich vertikal verlaufende Fluidkanäle 32a, 32b.

Die die Ventilsitze 30a, 30b ausbildende Zwischenplatte 24 ist dem unteren, die Schraubanschlüsse 26 und die Öffnungen 19a, 19b für die Membranen 20a, 20b aufweisenden Gehäuseteil 17 und einem in Fig.3 und Fig.4 oberen Gehäuseteil 33 zwischengeordnet, in welchem die Bauelemente der Elektromagnetventile 15a, 15 mit Ausnahme der in der Zwischenplatte 24 ausgebildeten Ventilsitze 30a, 30b aufgenommen sind. Die Ventilsitze 30a, 30b der beiden Elektromagnetventile 15a, 15b sind an der zum oberen Gehäuseteil 33 weisenden Fläche 43 der Zwischenplatte 24 ausgebildet.

Bevorzugt ist das obere Gehäuseteil 33 mit zwei Durchgangsbohrungen 34a, 34b zum Einsetzen von Bauteilen der Elektromagnetventile 15a, 15b wie ihren Ankern 35a, 35b und Magnetkernen 40a, 40b versehen, wobei die Mittelachsen 36a, 36b der Durchgangsbohrungen 34a, 34b parallel zu den Flächennormalen Magnetspulen der Elektromagnetventile 15a, 15b von der elektronischen Steuereinheit 10 angesteuert werden.

In den Durchgangsbohrungen 34a, 34b des oberen Gehäuseteils 33 sind die Anker 35a, 35b der Elektromagnetventile 15a, 15b vertikal, d.h. parallel zu den Flächennormalen 44 der Öffnungsränder 23a, 23b der Öffnungen 19a, 19b für die Membrane 20a, 20b beweglich geführt, wobei an den zu den Ventilsitzen 30a, 30b weisenden Enden beispielsweise Schließelemente 39a, 39b aus einem Elastomer angeordnet sind. Abhängig von der Bestromung der Magnetspulen der Elektromagnetventile 15a, 15b nehmen die Anker 35a, 35b daher eine vertikale Lage ein, in welcher die Schließelemente 39a, 39b die Ventilsitze 30a, 30b kontaktieren und damit den entsprechenden Fluidkanal 32a, 32b verschließen oder in welcher sie von den Ventilsitzen 30a, 30b abgehoben sind und somit einen Strömungsquerschnitt freigeben. Der Hub der Anker 35a, 35b wird durch die in die Durchgangsbohrungen 34a, 34b von oben her eingesetzte und dort fixierte Magnetkerne 40a, 40b begrenzt. Durch einerseits an den Ankern 35a, 35b und andererseits am oberen Gehäuseteil 33 abgestützte Federelemente 41 a, 41 b werden die Anker 35a, 35b in Richtung auf die Ventilsitze 30a, 30b vorgespannt.

Besonders bevorzugt besteht das Gehäuse 18 der Drucksteuerventilanordnung 7 lediglich oder ausschließlich aus drei Gehäuseteilen, nämlich dem unteren Gehäuseteil 17, der Zwischenplatte 24 und dem oberen Gehäuseteil 33. Diese drei Gehäuseteile 17, 24 und 33 sind beispielsweise miteinander verschraubt, wobei fluidführende Kanäle an Trennebenen der Gehäuseteile durch Dichtungen 42 abgedichtet sind.

Die Drucksteuerventilanordnung 7 wird dann mit wenigstens folgenden, in einer einzigen, hier vertikalen Montagerichtung erfolgenden Schritten, hier bevorzugt von oben her, montiert, ohne dass ein Umspannen notwendig ist:
a) Urformen der Membrane 20a, 20b der beiden Membranventile 14a, 14b, wobei die Membrane 20a, 20b gegebenenfalls fertigungsbedingt durch hier nicht gezeigte an- oder eingespritzte Dichtungen miteinander verbunden sind,
b) Fertigen der Ventilsitze 30a, 30b der Elektromagnetventile 15a, 15b in der Zwischenplatte 24 in der Fläche 43, welche zu dem oberen Gehäuseteil 33 weist,
c) Fertigen der Durchgangsbohrungen 34a, 34b in dem oberen Gehäuseteil 33 des Gehäuses 18 zur Aufnahme von Bauelementen der Elektromagnetventile 15a, 15b wie den Ankern 35a, 35b und den Magnetkernen 40a, 40b, wobei die Mittelachsen 36a, 36b der Durchgangsbohrungen 34a, 34b parallel zu den Flächennormalen 44 der Öffnungsränder 23a, 23b der Öffnungen 19a, 19b in dem unteren Gehäuseteil 17 sind,
d) Anordnen bzw. Spannen des unteren Gehäuseteils 17 derart, dass die Flächennormalen 44 der Öffnungsränder 23a, 23b der Öffnungen 19a, 19b nach oben weisen,
e) Einlegen der Membranen 20a, 20b der Membranventile 14a, 14b von oben her in die Öffnungen 19a, 19b des unteren Gehäuseteils 17 derart, dass die Membranränder 22a, 22b auf den Öffnungsrändern 23a, 23b aufliegen, und
f) gegebenenfalls Entfernen der die Membrane 20a, 20b verbindenden an- oder eingespritzten Dichtungen,
g) Aufbringen der Federelemente 16a, 16b auf die Membrane 20a, 20b bzw. Einlegen der Federelemente 16a, 16b in die Sacklochbohrungen 29a, 29b der Zwischenplatte 24,
h) Aufbringen der Zwischenplatte 24 auf das untere Gehäuseteil 17 derart, dass einerseits die Membranränder 22a, 22b zwischen dem unteren Gehäuseteil 17 und der Zwischenplatte 24 geklemmt bzw. gekontert und andererseits die Federelemente 16a, 16b an den Membranen 20a, 20b und der Zwischenplatte 24 abgestützt sind,
i) Einsetzen der Bauelemente der Elektromagnetventile 15a, 15b wie beispielsweise der Anker 35a, 35b und der Magnetkerne 40a, 40b in die Durchgangsbohrungen 34a, 34b des oberen Gehäuseteils 33 von unten her,
j) Aufbringen des oberen Gehäuseteils 33 auf die Zwischenplatte 24 von oben her, derart, dass die Ventilsitze 30a, 30b in der Zwischenplatte 24 mit den Ankern 35a, 35b der Elektromagnetventile 15a, 15b zusammenwirken können.

### Bezugszeichenliste

- 1: Vorderachse
- 2: Hinterachse
- 3: Rad
- 4: Rad
- 5: Drehzahlsensor
- 6: Bremszylinder
- 7: Drucksteuerventilanordnung
- 8: Bremsdruckleitung
- 9: Fußbremsventil
- 10: Steuereinheit
- 11: ASR-Einheit
- 12: ASR-Magnetventil
- 13: Wechselventil
- 14: Membranventil
- 15: Elektromagnetventil
- 16: Federelement
- 17: unteres Gehäuseteil
- 18: Gehäuse
- 19: Öffnungen
- 20: Membrane
- 21: Mittelachsen
- 22: Membranränder
- 23: Öffnungsränder
- 24: Zwischenplatte
- 25: Fläche
- 26: Schraubanschluss
- 28: Zentrierzapfen
- 29: Sacklochbohrung
- 30: Ventilsitze
- 31: Sacklochausnehmungen
- 32: Fluidkanäle
- 33: oberes Gehäuseteil
- 34: Durchgangsbohrungen
- 35: Anker
- 36: Mittelachse
- 37: Deckel
- 38: Steckkontaktgehäuse
- 39: Schließelemente
- 40: Magnetkerne
- 41: Federelemente
- 42: Dichtungen
- 43: Fläche
- 44: Flächennormale
- 45: Membranventilsitz
- 46: Fluidkanal

## Patentansprüche

1. Drucksteuerventilanordnung (7) zur Steuerung des Fluiddrucks in einer ABS-Bremsanlage eines Fahrzeugs derart, dass während einer Blockierneigung einzelner Räder (3a,3b;4a,4b) des Fahrzeugs der Bremsdruck in zugeordneten Bremszylindern (6a bis 6d) adaptiv anpassbar ist, wobei in einem Gehäuse (18) der Drucksteuerventilanordnung (7) zwei durch Federelemente (16a, 16b) belastete Membranen (20a, 20b) aufweisende Membranventile (14a, 14b) sowie zwei von einer elektronischen Steuereinrichtung (10) ansteuerbare elektromagnetische Steuerventile (15a, 15b) zum Vorsteuern der Membranventile (14a, 14b) vorgesehen sind, wobei in einer Fläche (25) eines Gehäuseteils (17) des Gehäuses (18) wenigstens eine Öffnung (19a, 19b) zum Einsetzen oder Einlegen der Membranen (20a, 20b) vorgesehen ist, und wobei in dem die wenigstens eine Öffnung (19a, 19b) für die Membranen (20a, 20b) aufweisenden einen Gehäuseteil (17) sämtliche Schraubanschlüsse (26) für Fluidleitungen ausgebildet sind, **dadurch gekennzeichnet, dass** in der Fläche (25) des einen Gehäuseteils (17) des Gehäuses (18) zwei nebeneinander angeordnete Öffnungen (19a, 19b) zum Einsetzen oder Einlegen der Membranen (20a, 20b) vorgesehen und Ränder (22a, 22b) der Membrane (20a, 20b) zwischen Öffnungsrändern (23a, 23b) der Öffnungen (19a, 19b) und einem weiteren Gehäuseteil (24) des Gehäuses (18) gehalten sind, und wobei die Öffnungsränder (23a, 23b) der Öffnungen (19a, 19b) in einer gemeinsamen Ebene liegen und die Flächennormalen (44) der Öffnungsränder (23a, 23b) der Öffnungen (19a, 19b) in die gleiche Richtung weisen, und wobei das weitere Gehäuseteil (24) dem einen Gehäuseteil (17) und einem anderen Gehäuseteil (33) zwischengeordnet ist, in welchem die elektromagnetischen Steuerventile (15a, 15b) wenigstens teilweise aufgenommen sind, und dass das die Öffnungen (19a, 19b) für die Membrane (20a, 20b) aufweisende eine Gehäuseteil (17) durch einen Leichtmetall-Spritzgussformling gebildet wird und das andere Gehäuseteil (33) ein Kunststoff-Spritzgussformling ist, in welchen die Magnetspulen der elektromagnetischen Steuerventile (15a, 15b) eingespritzt sind.

2. Drucksteuerventilanordnung nach Anspruch 1, **dadurch gekennzeichnet, dass** die die Membranen (20a, 20b) der Membranventile (14a, 14b) belastenden Federelemente (16a, 16b) einerseits zentral an den Membranen (20a, 20b) und andererseits an dem weiteren Gehäuseteil (24) abgestützt und ihre Wirkrichtung parallel zu den Flächennormalen der Öffnungsränder (23a, 23b) der Öffnungen (19a, 19b) in dem einen Gehäuseteil (17) sind.

3. Drucksteuerventilanordnung nach Anspruch 2, **dadurch gekennzeichnet, dass** in dem weiteren Gehäuseteil (24) zu dem einen Gehäuseteil (17) weisende Sacklochbohrungen (29a, 29b) zur wenigstens teilweisen Aufnahme der Federelemente (16a, 16b) vorgesehen sind.

4. Drucksteuerventilanordnung nach Anspruch 2 oder 3, **dadurch gekennzeichnet, dass** das weitere Gehäuseteil (24) durch einen plattenförmigen Kunststoff-Spritzgussformling mit Fluidkanälen (32a, 32b) gebildet wird, welche die in dem einen Gehäuseteil (17) ausgebildeten Fluidkanäle fortsetzen.

5. Drucksteuerventilanordnung nach Anspruch 4, **dadurch gekennzeichnet, dass** die Ventilsitze (30a, 30b) der elektromagnetischen Steuerventile (15a, 15b) einstückig mit dem weiteren Gehäuseteil (24) ausgebildet sind.

6. Drucksteuerventilanordnung nach Anspruch 5, **dadurch gekennzeichnet, dass** die Ventilsitze (30a, 30b) der elektromagnetischen Steuerventile (15a, 15b) kegelig ausgebildet sind und einen zentralen Fluidkanal (32a, 32b) begrenzen.

7. Drucksteuerventilanordnung nach einem der Ansprüche 5 oder 6, **dadurch gekennzeichnet, dass** die Ventilsitze (30a, 30b) an einer zu dem anderen Gehäuseteil (33) weisenden Fläche (43) des weiteren Gehäuseteils (24) ausgebildet ist.

8. Drucksteuerventilanordnung nach Anspruch 7, **dadurch gekennzeichnet, dass** das andere Gehäuseteil (33) mit Durchgangsbohrungen (34a, 34b) zum Einsetzen von Bauelementen der elektromagnetischen Steuerventile wie einem Anker (35a, 35b) oder einem Magnetkern (40a, 40b) versehen sind, wobei die Mittelachsen (36a, 36b) der Durchgangsbohrungen (34a, 34b) parallel zu den Flächennormalen der Öffnungsränder (23a, 23b) der Öffnungen (19a, 19b) in dem einen Gehäuseteil (17) angeordnet sind.

9. Drucksteuerventilanordnung nach Anspruch 8, **dadurch gekennzeichnet, dass** die Durchgangsbohrungen (34a, 34b) in dem anderen Gehäuseteil (33) durch einen Deckel (37) verschlossen sind.

10. Drucksteuerventilanordnung nach einem der Ansprüche 5 bis 9, **dadurch gekennzeichnet, dass** ihr Gehäuse (18) ausschließlich aus dem einen Gehäuseteil (17), dem weiteren Gehäuseteil (24) und dem anderen Gehäuseteil (33) besteht.

11. Drucksteuerventilanordnung nach einem der vorhergehenden Ansprüche, **dadurch gekennzeichnet, dass** sie eine einkanalige Drucksteuerventilanordnung ist.

## Claims

1. Pressure control valve arrangement (7) for controlling the fluid pressure in an ABS brake system of a vehicle in such a manner that, in the event of a tendency of individual wheels (3a, 3b; 4a, 4b) of the vehicle to lock, the brake pressure in associated brake cylinders (6a to 6d) can be adaptively adjusted, two diaphragm valves (14a, 14b) having diaphragms (20a, 20b) loaded by spring elements (16a, 16b) and two electromagnetic control valves (15a, 15b) which can be activated by an electronic control device (10) for the pilot control of the diaphragm valves (14a, 14b) being provided in a housing (18) of the pressure control valve arrangement (7), at least one opening (19a, 19b) for inserting or inlaying the diaphragms (20a, 20b) being provided in a surface (25) of a housing part (17) of the housing (18) all the screw connections (26) for fluid lines being formed in the one housing part (17) having the at least one opening (19a, 19b) for the diaphragms (20a, 20b), **characterized in that** two mutually adjacently arranged openings (19a, 19b) for the insertion or inlaying of the diaphragms (20a, 20b) are provided in the surface (25) of the one housing part (17) of the housing (18) and edges (22a, 22b) of the diaphragms (20a, 20b) are held between opening edges (23a, 23b) of the openings (19a, 19b) and a further housing part (24) of the housing (18), and the opening edges (23a, 23b) of the openings (19a, 19b) lying in a common plane and the surface normals (44) of the opening edges (23a, 23b) of the openings (19a, 19b) being oriented in the same direction, and the further housing part (24) being arranged between the one housing part (17) and another housing part (33) in which the electromagnetic control valves (15a, 15b) are received at least partially, and **in that** the one housing part (17) having the openings (19a, 19b) for the diaphragms (20a, 20b) is formed by a light alloy die casting and the other housing part (33) is a plastics injection molding in which the magnetic coils of the electromagnetic control valves (15a, 15b) are molded integrally.

2. Pressure control valve arrangement according to Claim 1, **characterized in that** the spring elements (16a, 16b) which load the diaphragms (20a, 20b) of the diaphragm valves (14a, 14b) bear at one end centrally against the diaphragms (20a, 20b) and at the other end against the further housing part (24), and their direction of action is disposed parallel to the surface normals of the opening edges (23a, 23b) of the openings (19a, 19b) in the one housing part (17).

3. Pressure control valve arrangement according to Claim 2, **characterized in that** blind bores (29a, 29b), facing towards the one housing part (17), are provided in the further housing part (24) for at least partially receiving the spring elements (16a, 16b).

4. Pressure control valve arrangement according to Claim 2 or 3, **characterized in that** the further housing part (24) is formed by a plate-like plastics injection molding with fluid passages (32a, 32b) which continue the fluid passages formed in the one housing part (17).

5. Pressure control valve arrangement according to Claim 4, **characterized in that** the valve seats (30a, 30b) of the electromagnetic control valves (15a, 15b) are formed integrally with the further housing part (24).

6. Pressure control valve arrangement according to Claim 5, **characterized in that** the valve seats (30a, 30b) of the electromagnetic control valves (15a, 15b) have a conical configuration and delimit a central fluid passage (32a, 32b).

7. Pressure control valve arrangement according to either of Claims 5 and 6, **characterized in that** the valve seats (30a, 30b) is formed on a surface (43) of the further housing part (24) facing towards the other housing part (33).

8. Pressure control valve arrangement according to Claim 7, **characterized in that** the other housing part (33) are provided with through-bores (34a, 34b) for inserting components of the electromagnetic control valves, such as an armature (35a, 35b) or a magnetic core (40a, 40b), the central axes (36a, 36b) of the through-bores (34a, 34b) being arranged parallel to the surface normals of the opening edges (23a, 23b) of the openings (19a, 19b) in the one housing part (17).

9. Pressure control valve arrangement according to Claim 8, **characterized in that** the through-bores (34a, 34b) in the other housing part (33) are closed by a cover (37).

10. Pressure control valve arrangement according to any one of Claims 5 to 9, **characterized in that** its housing (18) consists exclusively of the one housing part (17), the further housing part (24) and the other housing part (33).

11. Pressure control valve arrangement according to any one of the preceding claims, **characterized in that** it is a single-channel pressure control valve arrangement.

## Revendications

1. Ensemble de vannes de commande de pression (7) à commander la pression d'un fluide dans un système de freinage à ABS d'un véhicule d'une telle façon, qu'au cas d'une tendance au blocage des roues individuelles (3a, 3b ; 4a, 4b) du véhicule, on puisse adapter la pression de freinage dans des cylindres de frein affectés (6a à 6d) de manière adaptive, dans lequel, à ö intérieur d'un boîtier (18) de l'ensemble de vannes de commande de pression (7), deux soupapes à membrane (14a, 14b), qui comprennent des membranes (20a, 20b) chargées par des éléments de ressort (16a, 16b), ainsi que deux vannes de commande électromagnétiques (15a, 15b) sont disposées, qui sont aptes à être commandé par un dispositif de commande électronique (10) pour le pilotage desdites soupapes à membrane (14a, 14b), dans lequel au moins une ouverture (19a, 19b) est formée dans une surface (25) dudit boîtier (18) pour l'insertion ou le placement desdites membranes (20a, 20b), et dans lequel tous les raccords vissés (26) pour des conduits de fluide sont formés dans la partie (17) dudit boîtier, qui comprend ladite au moins une ouverture (19a, 19b) pour lesdites membranes (20a, 20b), **caractérisé en ce que** deux ouvertures (19a, 19b) disposées l'une à côté de l'autre sont formées dans ladite surface (25) de ladite première partie de boîtier (17) dudit boîtier (18) pour l'insertion ou le placement desdites membranes (20a, 20b), et **en ce que** des bords (22a, 22b) de ladite membrane (20a, 20b) sont retenus entre des bords d'ouverture (23a, 23b) desdites ouvertures (19a, 19b) et une partie de boîtier supplémentaire (24) dudit boîtier (18), et dans lequel lesdits bords d'ouverture (23a, 23b) desdites ouvertures (19a, 19b) se trouvent dans un plan commun et les normales à la surface (4) desdits bords d'ouverture (23a, 23b) desdites ouvertures (19a, 19b) sont orientées dans la même direction, et dans lequel ladite partie de boîtier supplémentaire (24) est interposée entre ladite première partie de boîtier (17) et une autre partie de boîtier (33), dans laquelle lesdites vannes de commande électromagnétiques (15a, 15b) sont reçues au moins en partie, et **en ce que** ladite première partie de boîtier (17) munie desdites ouvertures (19a, 19b) formées pour les membranes (20a, 20b) est constituée par un corps moulé par injection en métal léger, pendant que ladite autre partie de boîtier (33) est un corps moulé par injection en matière plastique, dans lequel sont injectées les bobines magnétiques desdites vannes de commande électromagnétiques (15a, 15b).

2. Ensemble de vannes de commande de pression selon la revendication 1, **caractérisé en ce que** lesdits éléments de ressort (16a, 16b), qui chargent lesdites membranes (20a, 20b) desdites soupapes à membrane (14a, 14b) s'appuient, d'un côté, en une position centrale auxdites membranes (20a, 20b), et, d'autre côté, à ladite partie de boîtier supplémentaire (24), à une direction d'action s'étendant en parallèle auxdites normales à la surface desdits bords d'ouverture (23a, 23b) desdites ouvertures (19a, 19b) dans ladite première partie de boîtier (17).

3. Ensemble de vannes de commande de pression selon la revendication 2, **caractérisé en ce que** des taraudages de trou borgne (29a, 29b) sont formés dans ladite partie de boîtier supplémentaire (24), qui sont orientés vers ladite première partie de boîtier (17), pour la réception, au moins en partie, desdits éléments de ressort (16a, 16b).

4. Ensemble de vannes de commande de pression selon la revendication 2 ou 3, **caractérisé en ce que** ladite partie de boîtier supplémentaire (24) est constituée par un corps moulé par injection d'une matière plastique, sous forme d'une plaque aux canaux de fluide (32a, 32b), qui continuent les conduits de fluide formés dans ladite première partie de boîtier (17).

5. Ensemble de vannes de commande de pression selon la revendication 4, **caractérisé en ce que** les sièges de soupape desdites vannes de commande électromagnétiques (15a, 15b) sont formées intégralement avec ladite autre partie de boîtier (24).

6. Ensemble de vannes de commande de pression selon la revendication 5, **caractérisé en ce que** lesdites sièges de soupape (30a, 30b) desdites vannes de commande électromagnétiques (15a, 15b) ont une configuration en cône et définissent un canal de fluide central (32a, 32b).

7. Ensemble de vannes de commande de pression selon une quelconque des revendications 5 ou 6, **caractérisé en ce que** lesdites sièges de soupape (30a, 30b) sont formées à une surface (43) de ladite partie de boîtier supplémentaire (24), qui est orientée vers ladite autre partie de boîtier (33).

8. Ensemble de vannes de commande de pression selon la revendication 7, **caractérisé en ce que** ladite autre partie de boîtier (33) est munie des perçages traversant (34a, 34b) pour l'insertion des composants desdites vannes de commande électromagnétiques (15a, 15b), par exemple une armature (35a, 35b) ou un noyau magnétique (40a, 40b), dans lequel les axes centraux (36a, 36b) desdits perçages traversant (34a, 34b) sont disposés en parallèle auxdites normales à la surface desdits bords d'ouverture (23a, 23b) desdites ouvertures (19a, 19b) dans ladite première partie de boîtier (17).

9. Ensemble de vannes de commande de pression selon la revendication 8, **caractérisé en ce que** lesdits perçages traversant (34a, 34b) dans ladite autre partie de boîtier (33) sont fermés par un couvercle (37).

10. Ensemble de vannes de commande de pression selon une quelconque des revendications 5 à 9, **caractérisé en ce que** son boîtier est constitué exclusivement par ladite première partie de boîtier (17), ladite partie de boîtier supplémentaire (24) et ladite autre partie de boîtier (33).

11. Ensemble de vannes de commande de pression selon une quelconque des revendications 5 à 9, **caractérisé en ce qu'**il est un ensemble de vannes de commande de pression à un seul canal.
